# EUROPEAN PATENT SPECIFICATION

(11) **EP 2 584 760 B1**
(45) Date of publication and mention of the grant of the patent: **24.01.2018**
(21) Application number: 11797592.0
(22) Date of filing: 16.06.2011
(51) Int. Cl.: H04L 29/06, H04L 29/08

(54) **METHOD FOR REALIZING VIDEO BROWSING, IP MULTIMEDIA SUBSYSTEM (IMS) VIDEO MONITORING SYSTEM, AND MONITORING FRONT END**
VERFAHREN ZUR DURCHFÜHRUNG VON VIDEOSUCHEN, IP-MULTIMEDIA-SUBSYSTEM-VIDEOÜBERWACHUNGSSYSTEM UND ÜBERWACHUNGS-FRONT-END
PROCÉDÉ POUR RÉALISER UNE CONSULTATION VIDÉO, SYSTÈME DE SURVEILLANCE VIDÉO DE SOUS-SYSTÈME MULTIMÉDIA AU PROTOCOLE IP (IMS) ET ORDINATEUR FRONTAL DE SURVEILLANCE

(30) Priority: 21.06.2010 CN 201010211873
(43) Date of publication of application: 24.04.2013
(73) Proprietor: ZTE Corporation, Shenzhen, Guangdong 518057 (CN)
(72) Inventor: CHEN, Jie, Shenzhen Guangdong 518057 (CN)
(74) Representative: Modiano, Micaela Nadia
(86) International application number: PCT/CN2011/075812
(87) International publication number: WO 2011/160561

(56) References cited:
- WO-A1-2009/114956
- CA-A1- 2 394 250
- CN-A- 1 913 533
- CN-A- 101 217 648
- CN-A- 101 355 580
- CN-A- 101 448 072
- CN-A- 101 895 569
- US-A1- 2010 125 626

## Description

### TECHNICAL FIELD

The disclosure relates to the field of multimedia communication technology, and in particular to a method for realizing video browsing based on IP Multimedia Subsystem (IMS) architecture, a video monitoring system and a monitoring peripheral unit.

### BACKGROUND

The technical features and advantages, such as the IMS unified access control, the convergence of various multimedia services, and the multimedia service quality reliability are gradually approved by the telecom operators. The telecom operators are stepping up the deployment of the IMS core network, and gradually moving various services to the IMS core network. The unified access, unified call and media session establishing mode in the IMS can conveniently realize the service convergence among various applications.

The network video monitoring service is essentially a multimedia service, and the realization of the network video monitoring service based on the IMS architecture is the development trend of the network video monitoring service technology.

The video monitoring service has its own service model and service features, for example, there is home personal monitoring as well as public service oriented monitoring. In the home personal monitoring, a monitoring peripheral unit is often browsed by only one or a few monitoring clients; in this case, the way of directly establishing media session between the monitoring client and the monitoring peripheral unit can be adopted. However, in the public service oriented monitoring, for example, the monitoring in a scenic spot, there will be a large number of clients simultaneously accessing a monitoring peripheral unit to browse videos; in this case, because of the limitation of both hardware of the monitoring peripheral unit itself and network bandwidth, it is necessary to perform forwarding transmission of media stream through a media server, so as to utilize the delivery capability of the media server to simultaneously serve multiple monitoring clients.

The traditional voice services (e.g. voice call and video call) are often realized on the IMS architecture by establishing point-to-point media session between two terminals, and some other services (e.g. audio conference and video conference) need to be realized via forwarding of the media server in the IMS network.

For realizing the video monitoring service based on the IMS architecture, if the point-to-point direct media session connection is adopted, the monitoring of large concurrency cannot be realized; if the solution of forwarding via the media server is adopted, the small concurrency oriented application will cause waste of server resource.

CA 2394250 A1 (SUNGJIN C & CLTD [KR]) 31 January 2002 (2002-01-31) discloses a relaying system for multi-channel Internet broadcasting from a local live server, which makes it possible to have a multiple of live relaying servers shared by several local servers depending on the number of connections requested by client computers.

CN101355580 A discloses that a network video monitoring system with a P2P mode and a transfer mode.

US 2010/0125626 A1 discloses that a method of delivering content to a client includes receiving a request for the content from the client at a first server, determining the size of the content. The method further includes redirecting the client to the optimal server when the size of the content is above a threshold.

### SUMMARY

The technical problem to be solved by the disclosure is to provide a method for realizing video browsing, an IMS video monitoring system and a monitoring peripheral unit, which can realize the optimized resource configuration under all kinds of service models for the video monitoring.

This problem is solved by a method for realizing video browsing as defined in claim 1, by an IMS video monitoring system as defined in claim 4 and by monitoring peripheral unit as defined in claim 5.

For solving the technical problem, an embodiment of the disclosure provides a method for realizing video browsing, applied to an IMS video monitoring system which includes a monitoring peripheral unit, an IMS core network and a server, according to independent claim 1. The process of converting the media session connections which have already been established between the monitoring peripheral unit and other monitoring client units such that the other monitoring client units browse the videos of the monitoring peripheral unit via the forwarding of the server may include:
if the monitoring peripheral unit reserves a media session connection which is, in the case of the forwarding of the server, dedicated to uploading the video stream to the server, the monitoring peripheral unit sends a session update notification to the other monitoring client units, so as to make the other monitoring client units update session parameters according to the session update notification, and the server sends the video stream of the monitoring peripheral unit to the monitoring client unit according to the updated session parameters; or
if the monitoring peripheral unit does not reserve a media session connection which is, in the case of the forwarding of the server, dedicated to uploading the video stream to the server, the monitoring peripheral unit breaks a media session connection with one of the other monitoring client units, and switches to use the forwarding of the server, and in the case of the forwarding of the server, uploads the video stream to the server, and sends a session update notification to the monitoring client unit to which the broken media session connection corresponds, so as to make the corresponding monitoring client unit update the session parameters according to the session update notification, and the server sends the video stream of the monitoring peripheral unit to the monitoring client unit according to the updated session parameters.

After the process of converting the media session connections which have already been established between the monitoring peripheral unit and other monitoring client units such that the other monitoring client units browse the videos of the monitoring peripheral unit via the forwarding of the server, the method may further include:
after all the monitoring client units having media session connection with the server stop obtaining the video stream of the monitoring peripheral unit from the server, the server initiatively breaks the media session connection with the monitoring peripheral unit.

The disclosure further provides an IMS video monitoring system, which includes an IMS core network, a monitoring peripheral unit, and a server connected with the IMS core according to claim 4. The disclosure further provides a monitoring peripheral unit, according to independent claim 4, applied to an IMS video monitoring system which includes an IMS core network and a server. The technical solutions of the disclosure have the following beneficial effects:
in above solutions, the monitoring peripheral unit decides, according to the number of the media session connections established with itself, whether to establish a direct media session connection with the monitoring client unit or a media session via the forwarding of the server, so as to realize the optimized resource configuration under all kinds of service models for the video monitoring, and do not waste the server resources. Besides, the standard IMS call mode is adopted to establish a media session between the monitoring peripheral unit and the monitoring client unit and realize the switch between the direct connection and the way of forwarding-via-server, which does not influence the convergence between the video monitoring service and other various services in the whole IMS system.

### BRIEF DESCRIPTION OF THE DRAWINGS

Fig. 1 shows an architecture diagram of an IMS video monitoring system of the disclosure;
Fig. 2 shows a flowchart of a method for realizing video browsing of the disclosure;
Fig. 3 shows a schematic diagram of an embodiment of the flow shown in Fig. 2; and
Fig. 4 shows a schematic diagram of an embodiment of the flow shown in Fig. 3.

### DETAILED DESCRIPTION

For making the technical problem to be solved by the disclosure, the technical solutions and the advantages of the disclosure more clear, the disclosure is described below with reference to the accompanying drawings and embodiments in detail.

Aiming at the problems in the existing video monitoring service that monitoring of large concurrency cannot be realized if a point-to-point direct media session connection is adopted, and waste of server resources will be caused for application of small concurrency if a solution of forwarding via media server is adopted, the disclosure provides a method for realizing video browsing which can realize the optimized resource configuration under all kinds of service models for the video monitoring and an IMS video monitoring system.

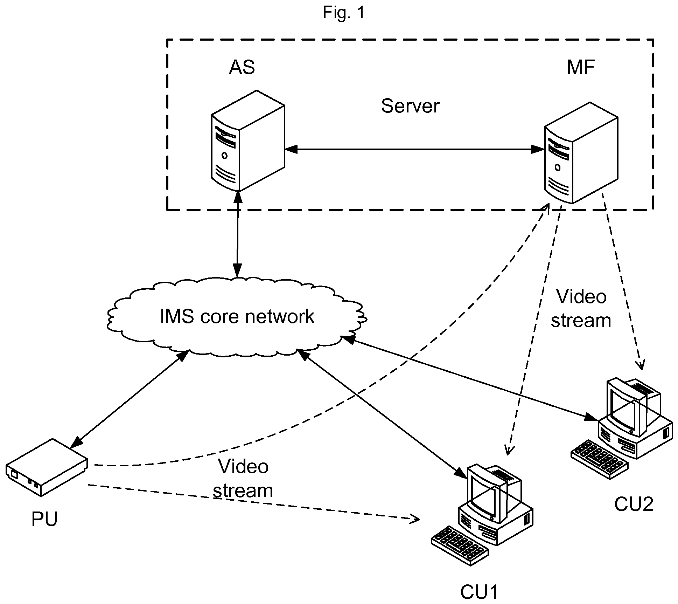

As shown in Fig. 1, first of all, the overall architecture of the IMS video monitoring system of the disclosure is introduced; the IMS video monitoring system includes:
a monitoring Client Unit (CU), an IMS core network, a monitoring Peripheral Unit (PU), and a server connected with the IMS core network; wherein the server may include an Application Server (AS) and a Media Function (MF), wherein the MF is mainly configured to store the video stream uploaded by the monitoring peripheral unit, and the MF may be either a part of the AS or a single server. In Fig. 1, the MF is shown as a single server.

The monitoring client unit receives media stream (e.g. the video stream of the monitoring peripheral unit) through the network, decodes the video stream and displays video image. The monitoring client unit, as a kind of User Equipment (UE), is accessed to the IMS core network in a united manner, and the IMS core network performs security access authentication on the monitoring client unit uniformly.

The IMS core network implements routing and transmission of a signaling message, implements unified access and management of the UE, and can trigger different signaling to corresponding servers for process by setting a service triggering rule.

The monitoring peripheral unit acquires and encodes analog video data, and sends the video stream through the network. The monitoring peripheral unit, also as a kind of UE, is accessed to the IMS core network in a united manner, and the IMS core network performs security access authentication on the monitoring peripheral unit uniformly.

The AS, as a specific application server, takes charge of processing all services related to the video monitoring. The typical AS includes the following functional entities: Service Discovery Function (SDF), Service Selection Function (SSF), and Service Control Function (SCF). The implementation method for inside of the AS is not limited in this application.

The MF implements media control, media delivery, media storage and other functions. The MF may either serve as a part of the AS, or directly use existing media control and delivery unit in the IMS core network.

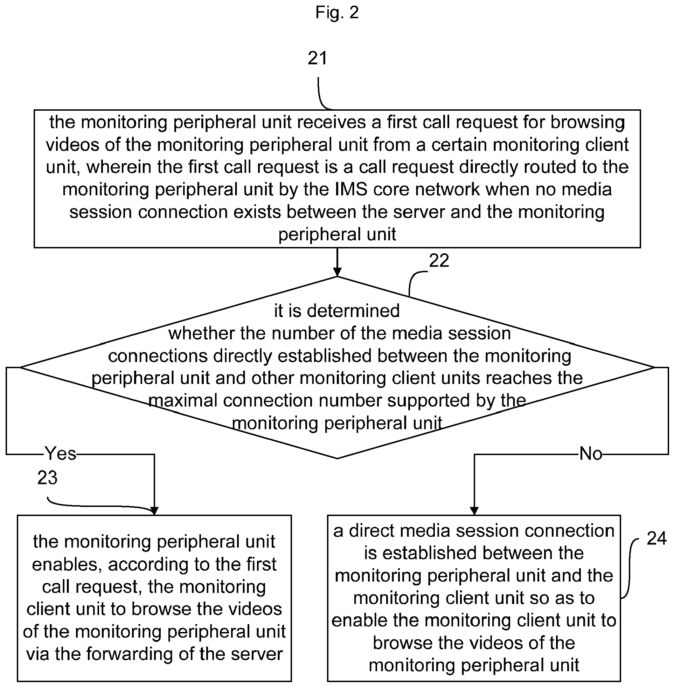

As shown in Fig. 2, with reference to the system shown in Fig. 1, an embodiment of the disclosure provides a method for realizing video browsing, applied to the IMS video monitoring system which includes the monitoring peripheral unit, the IMS core network and the server. The method includes the following steps.

Step 21: the monitoring peripheral unit receives a first call request for browsing videos of the monitoring peripheral unit from a certain monitoring client unit, wherein the first call request is a call request directly routed to the monitoring peripheral unit by the IMS core network when no media session connection exists between the server and the monitoring peripheral unit.

Specifically, the IMS core network receives the first call request for browsing videos of the monitoring peripheral unit from the monitoring client unit. The IMS core network triggers the server connected with the IMS core network according to the first call request (specifically, sending the first call request to the server). If there is no media session connection established between the server and the monitoring peripheral unit, the server directly routes the first call request to the monitoring peripheral unit; or else, the server directly processes the first call request, and sends the video stream of the monitoring peripheral unit to the monitoring client unit.

Step 22: it is determined whether the number of the media session connections directly established between the monitoring peripheral unit and other monitoring client units reaches the maximal connection number supported by the monitoring peripheral unit; if so, executing Step 23; or else, executing Step 24.

Step 23: if the number of the media session connections directly established between the monitoring peripheral unit and other monitoring client units reaches the maximal connection number supported by the monitoring peripheral unit, the monitoring peripheral unit enables, according to the first call request, the monitoring client unit to browse the videos of the monitoring peripheral unit via the forwarding of the server.

Step 24: if the number of the media session connections directly established between the monitoring peripheral unit and other monitoring client units does not reach the maximal connection number supported by the monitoring peripheral unit, a direct media session connection is established between the monitoring peripheral unit and the monitoring client unit so as to enable the monitoring client unit to browse the videos of the monitoring peripheral unit.

The monitoring peripheral unit decides, according to the number of the media session connections already established, whether to establish a direct media session connection with the monitoring client unit or a media session connection via the forwarding of the server, so that the embodiment of the disclosure realizes the optimized resource configuration under all kinds of service models (e.g. the model of large concurrency of the monitoring client units or the model of small concurrency of the monitoring client units) for the video monitoring, and does not waste the server resource. Besides, the standard IMS call mode is adopted to establish a media session between the monitoring peripheral unit and the monitoring client unit and realize the switch between the direct connection and the way of forwarding-via-server, which does not influence the convergence between the video monitoring service and other various services in the whole IMS system.

Furthermore, in Step 23, the operation that, the monitoring peripheral unit enables, according to the first call request, the monitoring client unit to browse the videos of the monitoring peripheral unit via the forwarding of the server, specifically includes the following steps:
Step 231: the monitoring peripheral unit interacts with the server according to the first call request, and guides the monitoring client unit to initiate a second call request for browsing the videos of the monitoring peripheral unit; and
Step 232: the server sends the video stream of the monitoring peripheral unit to the monitoring client unit according to the second call request, so that the monitoring client unit can complete browsing of the videos of the monitoring peripheral unit.
Step 231 specifically includes the following steps 2311- 2313.
Step 2311: the monitoring peripheral unit uploads the video stream of the monitoring peripheral unit to the server.
   specifically, the monitoring peripheral unit initiates a call for establishing media session connection to the server (which may be an AS), and uses the media session connection to upload the video stream (which may be uploaded to the MF to store); or, the monitoring peripheral unit initiates a notification message to the AS, and the AS initiatively calls the monitoring peripheral unit and establishes the media session connection, so as to make the monitoring peripheral unit use the media session connection to upload the video stream to the MF.
Step 2312: the monitoring peripheral unit replies a redirection response to the monitoring client unit according to the first call request.
Step 2313: the monitoring client unit initiates the second call request for browsing the videos of the monitoring peripheral unit according to the redirection response.

Furthermore, after Step 23, the method may also include:
Step 230: the media session connections which have already been established between the monitoring peripheral unit and other monitoring client units are coverted such that these other monitoring client units browse the videos of the monitoring peripheral unit via the forwarding of the server.
when the number of the media session connections established between multiple monitoring client units and the monitoring peripheral unit is large (e.g. exceeding the maximal connection number supported by the monitoring peripheral unit), all the media session connections between the monitoring client units and the monitoring peripheral unit are converted to the way of forwarding via a server; and when the connection number does not exceed the maximal connection number, the direct media session connections between the monitoring client units and the monitoring peripheral unit is kept unchanged, therefore the optimized resource configuration is achieved, and the browsing of the monitoring client unit on the videos of the monitoring peripheral unit is not influenced.

Furthermore, Step 230 may specifically include:
if the monitoring peripheral unit reserves a line of media session connection which is dedicated to uploading the video stream to the server under the way of forwarding via server, the monitoring peripheral unit sends a session update notification to the other monitoring client units, so as to make the other monitoring client units update session parameters according to the session update notification, and the AS sends the video stream of the monitoring peripheral unit to the other monitoring client units according to the updated session parameters. In the process of switching, the monitoring peripheral unit does not have to break the direct media session connection established with the monitoring client unit, and the videos that the monitoring client unit are browsing will not be interrupted, which ensures the fluency of browsing the videos by the monitoring client unit.

Certainly, Step 230 may also specifically include:
if the monitoring peripheral unit does not reserve a media session connection which is dedicated to uploading the video stream to the server under the way of forwarding via a server, the monitoring peripheral unit breaks a media session connection with one of the other monitoring client units, uses the broken media session connection to upload the video stream to the server, and sends a session update notification to the monitoring client unit to which the broken media session connection corresponds, so as to make the corresponding monitoring client unit update the session parameters according to the session update notification, and the server sends the video stream of the monitoring peripheral unit to the monitoring client unit according to the updated session parameters; wherein the session parameters may be the IP address and the port of the video stream sender.

Furthermore, after Step 230, the method may also include:
after all the monitoring client units having media session connection with the server stop obtaining the video stream of the monitoring peripheral unit from the server, the server initiatively breaks the media session connection with the monitoring peripheral unit, which can save network bandwidth and server resources.

In the embodiment of the disclosure, the monitoring client unit is not limited to the dedicated video monitoring client unit; any standard client accessing to the IMS core network and supporting corresponding encoding format (e.g. a mobile phone with function of video call) can realize it.

In the embodiment shown in Fig. 2, after initiating the call request for browsing the videos of the monitoring peripheral unit, the monitoring client unit may not need to trigger the server and determine whether there is the media session connection between the server and the monitoring peripheral unit, it instead may directly route the call request to the monitoring peripheral unit in the normal way. The monitoring peripheral unit determines whether to forward the call request via a server according to the number of the currently established media session connections; if the monitoring peripheral unit determines that the number of the currently established media session connections reaches the maximal connection number supported by the monitoring peripheral unit, the current call request is processed by the server (i.e. the monitoring peripheral unit interacts with the application server, uploads its video steam to the media server, and guides the monitoring client unit to initiate the call request for browsing the videos to the server).

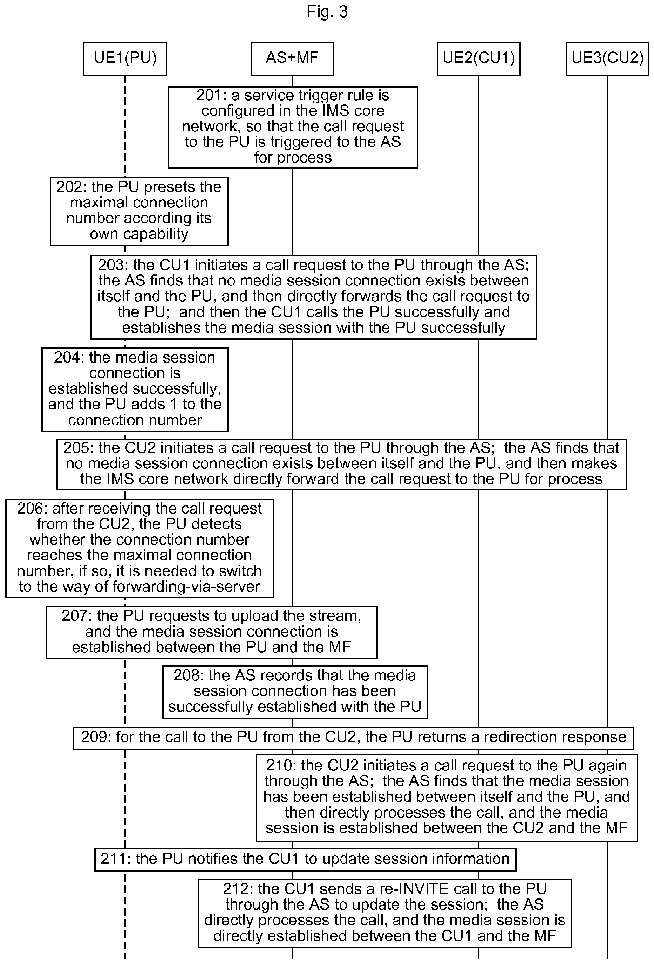

Fig. 3 shows a specific implementation flowchart of the method shown in Fig. 2, taking that two monitoring client units CU1 and CU2 request the monitoring Peripheral Unit (PU) for video browsing for example.

Step 201: first, a service trigger rule is configured in the IMS core network, so that all the call requests to the monitoring peripheral unit are triggered to the AS for process, for example, by differentiating Public User Identities (PUI) of the monitoring peripheral unit.

Step 202: the monitoring peripheral unit presets the maximal number of media session connections that it can support (for example, 2 or 4 lines) according to its own hardware capability, bandwidth value and the like. The monitoring peripheral unit may reserve one line as the media session connection for uploading the video stream under the way of forwarding via a server.

Step 203: the monitoring client unit CU1 initiates a call request to the monitoring peripheral unit. After the call request is triggered to the AS, the AS determines whether the media session connection has been established between itself and the PU; if not, continues to route the call request to the PU for process. After receiving the call request, the PU determines whether the current connection number does not exceed the maximal connection number, if so, the PU accepts the call and establishes the direct media session connection between itself and the CU1.

Step 204: after the direct media session connection between the PU and the CU1 is established successfully, the PU adds 1 to its connection number.

Step 205: the monitoring client unit CU2 initiates the call request to the monitoring peripheral unit PU. After the call request is triggered to the AS, the AS determines whether the media session connection has been established between itself and the PU; if not, continues to route the call request to the PU for process.

Step 206: after receiving the call request of the CU2, the PU determines whether the current connection number exceeds the maximal connection number; if so, switches to the way of forwarding via a server.

Step 207: the PU requests to upload the video stream and establishes the media session connection with the server (which may be an MF). For example, the PU calls the AS through SIP INVITE and establishes the media session connection; or the PU sends the SIP message to notify the AS, and then the AS initiatively calls the PU and establishes the media session connection.

Step 208: the AS records that the media session connection has been successfully established with the PU.

Step 209: for the call request initiated by the CU2, the PU cannot establish the direct connection media session; so the PU replies the redirection response defined by the standard in the call process, and guides the CU2 to initiate a call request again.

Step 210: the CU2 initiates the call request to the PU again after receiving the redirection response. After the call request is triggered to the AS, if the AS determines that the media session connection between itself and the PU has been established, then the AS processes the call request, and establishes the media session connection between the CU2 and the AS (or MF).

Step 211: for the situation that the PU does not reserve one line as the media session connection for uploading the video stream, the PU breaks one of the direct media session connections that have been established (i.e. breaks the direct media session connection that has been established between the PU and the CU1) and switches to use the way of forwarding via a server, at this point, the PU sends a notification message to notify the CU1 to initiatively update session information.

Step 212: the CU1 receiving the notification initiatively updates the session parameters, and for example, uses re-INVITE to initiate a call. The AS processes the call and updates the session parameters therein (i.e. the IP address and port of the video stream sender), the CU1 establishes a forwarding media session with the AS (or MF), and obtains the video stream of the PU from the MF.

In the specific implementation of the flow shown in Fig. 3, the SIP/SDP protocol may be adopted as the interface protocol between the video monitoring AS and the IMS core network. The MF implements media control, media delivery, media storage and other functions, and may either use the existing media control and delivery unit in the IMS core network or the dedicated video monitoring service unit, which is not limited in this application. The MF may serve as a part of the AS; in the above flow of the disclosure, the AS and the MF are described as an entity (server). The interface between the MF and the AS can adopt either the standard SIP/SDP protocol, or a private protocol. Both the monitoring client unit and the monitoring peripheral unit serve as the UE in the IMS core network, and the interface protocol between them and the IMS core network adopts the SIP/SDP protocol. Both the monitoring client unit and the monitoring peripheral unit need to register in the IMS core network first of all. Media data of monitoring video stream may be transmitted between different UEs or between the UE and the MF. The SIP INVITE method is usually adopted to conduct call and establish the media session, and the media data of video stream is transmitted through the RTP/RTCP protocol.

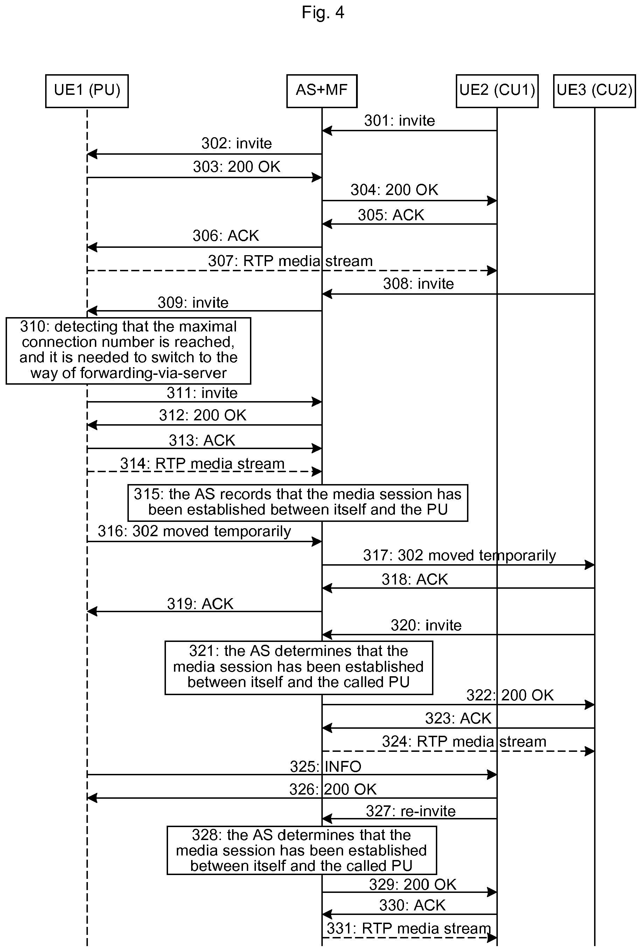

Fig. 4 shows a flowchart of a specific application embodiment of the flow shown in Fig. 3, and the method includes the following.

Steps 301 to 307 describe the process of call and the media session connection establishment when the connection number of the monitoring peripheral unit does not exceed the maximal connection number.

Step 301: the monitoring client unit CU1 requests to play real-time video of the monitoring peripheral unit. The CU1 initiates the SIP INVITE call to the PU; the message is sent through the IMS core network; and the IMS core network first triggers the call to a specific video monitoring AS according to a subscription data rule.

Step 302: the video monitoring AS parses the SIP message, determines that no media session connection is established between the AS and the call target PU, and the AS does not perform further processing, but continues routing the call request to the PU.

Step 303: the PU receives the call request from the CU1, determines that the current connection number does not exceed the maximal connection number, and then accepts the call request, and returns a 200 OK message.

Step 304: the 200 OK message returned by the PU is returned back via the same route, and the CU1 receives the call accepting response from the PU.

Step 305 - 306: the CU1 sends an acknowledgement message (ACK) to the PU.

Step 307: the direct media session connection is established between the CU1 and the PU successfully. The PU starts to send the video stream to the CU1, wherein the transmission of the video stream usually adopts the RTP and RTCP protocol. The CU1 decodes and plays the received video stream, which means that requesting for browsing video is successful. After the direct media session connection is established successfully, the PU adds 1 to the current number of media session connections.

Steps 308 to 319 describe the processing when the current connection number of the monitoring peripheral unit just reaches the maximal connection number.

Step 308: another monitoring client unit CU2 in the system requests to play the videos of the PU. The CU2 initiates the SIP INVITE call to the PU; and the SIP message is first triggered to the AS when passing the IMS core network.

Step 309: the AS determines that there is no media session connection between itself and the PU currently, and then the AS does not perform further processing, but continues routing the call request to the PU.

Step 310: the PU receives the call request of the CU2, and checks the current number of media session connections; when the number reaches the preset maximal connection number, the subsequent media session needs to be established via the forwarding of a server.

Step 311: the PU initiates the INVITE call to the AS to request to upload the video stream.

Step 312: the AS accepts the call from the PU, and returns a 200 OK response.

Step 313: after receiving the response from the AS, the PU sends an ACK to the AS.

Step 314: after the call is established successfully, the media session connection is established between the PU and the AS. The PU sends the video stream to the AS, and the video stream is usually transmitted by using the RTP and RTCP protocol (in the embodiment, the MF is a part of the AS).

Step 315: the AS records that the media session connection has been established between itself and the PU successfully, so that the AS can accepts a call when receiving the call to the PU from a certain CU again, and the forwarding media session is established between the AS and the CU.

Steps 316 - 317: after the PU and the AS establish the media session connection of uploading the video stream successfully, for the call request from the CU2, the PU returns a 302 moved temporarily (redirection) response, wherein the address of redirection is still the address of the PU for guiding the CU2 to initiate a call request again.

Steps 318 - 319: the CU2 sends an ACK message to the PU to confirm that the redirection response is received.

Steps 320 to 324 describe the flow that the CU2 initiates the call to the PU again after receiving the redirection response.

Step 320: the CU2 initiates an INVITE call to the PU again, and first triggers the call to the AS through the IMS core network.

Step 321: the AS parses that the call target is the PU, and determines that the media session has been established between the AS and the target PU, at this point, the AS processes the call.

Step 322: the AS sends the response (200 OK) representing acceptance of the call to the CU2;.

Step 323: after receiving the call accepting response, the CU2 sends the ACK.

Step 324: after receiving the ACK from the CU2, the AS starts to forward the video stream of the peripheral unit to the CU2, wherein the transmission of the video stream usually adopts the RTP and RTCP protocol; at this point, the forwarding media session is established between the CU2 and the AS successfully.

Steps 325 to 331 describe the process of switching the direct connection media session between the PU and the CU1 to the forwarding media session.

Step 325: the monitoring peripheral unit PU decides to switch the direct connection media session between itself and a certain client unit to the forwarding media session. In the embodiment, taking the CU1 for example, the PU sends the SIP message to notify the CU1 to initiatively update session information; in the embodiment, the SIP INFO message may be adopted, but other SIP message, such as MESSAGE may also be adopted. Besides, the message may be sent via the existing SIP conversation between the PU and CU1, or may be sent outside the SIP conversation.

Step 326: the CU1 returns the response (200 OK) after receiving the message.

Step 327: the CU1 initiates a re-INVITE call, and the CU does not break the existing SIP call conversation, but only requests to update the session information. In the embodiment, only IP address and port of the media (video stream) sender are updated, and the message is first triggered to the AS through the IMS core network.

Step 328: after receiving the call request, the AS determines that the media session has been established between itself and the PU.

Steps 329 - 331: the AS processes the call request and returns an 200 OK message to the CU1, and the CU1 sends an ACK; so far the forwarding media session is established between the AS and the CU1 successfully, and the video stream of the PU is transmitted to the CU1.

By establishing the media session connection between the monitoring peripheral unit and the monitoring client unit and implementing switching between direction connection and forwarding, and by the way that the monitoring peripheral unit decides whether to establish the direct connection media session or the forwarding media session according to its own connection number and implements the switching process without interrupting a call via updating the session parameters, the method of the disclosure realizes the optimized resource configuration under all kinds of service models for the video monitoring, does not waste the server resources compared with the traditional video monitoring system which is not based on the IMS architecture. Besides, the method is implemented by adopting the standard call flow in the IMS system, which does not influence the convergence between the video monitoring service and other various services in the whole IMS system.

As shown in Fig. 1, the embodiment of the disclosure further provides an IMS video monitoring system, which includes the IMS core network, the monitoring peripheral unit and the server connected with the IMS core network; wherein
the IMS core network is configured to receive a first call request for browsing videos of the monitoring peripheral unit from a certain monitoring client unit, and request to trigger the server according to the first call request;
the server is configured, when no media session connection is established between itself and the monitoring peripheral unit, to notify the IMS core network to directly route the first call request to the monitoring peripheral unit; and
the monitoring peripheral unit is configured to determine whether the number of the media session connections directly established between itself and other monitoring client units reaches the maximal connection number supported by itself according to the first call request, if so, enable the monitoring client unit to browse the videos of the monitoring peripheral unit via the forwarding of the server, otherwise, establish a direct media session connection between itself and the monitoring client unit so as to enable the monitoring client unit to browse the videos of the monitoring peripheral unit.

It should be noted that, all the embodiments of the method are suitable for the IMS video monitoring system and can achieve the same technical effect, so they will not be repeated here.

The embodiment of the disclosure further provides a monitoring peripheral unit, applied to the IMS video monitoring system which includes the IMS core network and the server; the monitoring peripheral unit includes:
a receiving module, which is configured to receive a first call request for browsing videos of the monitoring peripheral unit from a monitoring client unit, wherein the first call request is a call request directly routed to the monitoring peripheral unit by the IMS core network when no media session connection exists between the server and the monitoring peripheral unit; and
a processing module, which is configured, when the number of the media session connections directly established between the monitoring peripheral unit and other monitoring client units reaches the maximal connection number supported by the monitoring peripheral unit, to enable the monitoring client unit to browse the videos of the monitoring peripheral unit via the forwarding of the server according to the first call request, otherwise, to establish a direct media session connection between the monitoring peripheral unit and the monitoring client unit so as to enable the monitoring client unit to browse the videos of the monitoring peripheral unit.

The processing module may include:
a determining module, which is configured to determine whether the number of the media session connections directly established between the monitoring peripheral unit and other monitoring client units reaches the maximal connection number supported by the monitoring peripheral unit according to the first call request, if so, trigger a forwarding-via-server module, otherwise, trigger a direct session module;
the forwarding-via-server module, which is configured to interact with the server, and guide the monitoring client unit to initiate a second call request for browsing the videos of the monitoring peripheral unit again, so as to make the server send the video stream of the monitoring peripheral unit to the monitoring client unit according to the second call request; and
the direct session module, which is configured to establish the direct media session connection with the monitoring client unit, so as to enable the monitoring client unit to browse the videos of the monitoring peripheral unit.

The forwarding-via-server module may include:
an uploading module, which is configured to upload the video stream of the monitoring peripheral unit to the server; and
the responding module, which is configured to send a redirection response to the monitoring client unit according to the first call request, so as to make the monitoring client unit initiate the second call request for browsing the videos of the monitoring peripheral unit according to the redirection response, and make the server send the video stream of the monitoring peripheral unit to the monitoring client unit according to the second call request.

The monitoring peripheral unit may further include: a control module, which is configured, after the monitoring peripheral unit enables the monitoring client unit to browse the videos of the monitoring peripheral unit via the forwarding of the server according to the first call request, to convert the media session connections which have already been directly established between the monitoring peripheral unit and other monitoring client units such that the other monitoring client units browse the videos of the monitoring peripheral unit via the forwarding of the server.

It should be noted that, all the embodiments of the method are suitable for the embodiment of device; similarly, by establishing the media session connection between the monitoring peripheral unit and the monitoring client unit and implementing switching between direction connection and forwarding, and by the way that the monitoring peripheral unit decides whether to establish the direct connection media session or the forwarding media session according to its own connection number and implements the switching process without interrupting a call via updating the session parameters, the embodiment of device realizes the optimized resource configuration under all kinds of service models for the video monitoring, and does not waste the server resources compared with the traditional video monitoring system which is not based on the IMS architecture. Besides, the device is implemented by adopting the standard call flow in the IMS system, which does not influence the convergence between the video monitoring service and other various services in the whole IMS system.

The above are the preferred embodiments of the disclosure; it should be noted that for those skilled in the art, the disclosure may have various improvements and enrichments without departing from the principle of the disclosure. The scope of the invention is defined by the appended claims.

## Claims

1. A method for realizing video browsing, applied to an IP Multimedia Subsystem (IMS) video monitoring system which includes a monitoring peripheral unit, an IMS core network and a server, the method comprising:
receiving (21), by the monitoring peripheral unit, a first call request for browsing videos of the monitoring peripheral unit from a monitoring client unit, wherein the first call request is a call request directly routed to the monitoring peripheral unit by the IMS core network when no media session connection exists between the server and the monitoring peripheral unit;
enabling (22, 23), by the monitoring peripheral unit according to the first call request, the monitoring client unit to browse the videos of the monitoring peripheral unit via a forwarding by the server, if the number of direct media session connections between the monitoring peripheral unit and other monitoring client units reaches a maximal connection number supported by the monitoring peripheral unit; otherwise, establishing (24) a direct media session connection between the monitoring peripheral unit and the monitoring client unit, so as to enable the monitoring client unit to browse the videos of the monitoring peripheral unit, wherein the method further comprises: after the process that the monitoring peripheral unit enables, according to the first call request, the monitoring client unit to browse the videos of the monitoring peripheral unit via the forwarding by the server, converting media session connections which have already been established between the monitoring peripheral unit and other monitoring client units such that the other monitoring client units browse the videos of the monitoring peripheral unit via the forwarding by the server;
wherein the process that the monitoring peripheral unit enables, according to the first call request, the monitoring client unit to browse the videos of the monitoring peripheral unit via the forwarding by the server comprises:
interacting, by the monitoring peripheral unit, with the server according to the first call request, guiding the monitoring client unit to initiate a second call request for browsing the videos of the monitoring peripheral unit, so as to make the server send a video stream of the monitoring peripheral unit to the monitoring client unit according to the second call request;
wherein the process that the monitoring peripheral unit interacts with the server according to the first call request and guides the monitoring client unit to initiate a second call request for browsing the videos of the monitoring peripheral unit comprises:
uploading, by the monitoring peripheral unit, the video stream of the monitoring peripheral unit to the server;
returning, by the monitoring peripheral unit, a redirection response to the monitoring client unit according to the first call request, so as to make the monitoring client unit initiate the second call request for browsing the videos of the monitoring peripheral unit according to the redirection response.

2. The method according to claim 1, wherein the process of converting the media session connections which have already been established between the monitoring peripheral unit and other monitoring client units such that the other monitoring client units browse the videos of the monitoring peripheral unit via the forwarding by the server, comprises:
if the monitoring peripheral unit reserves a media session connection which is dedicated to uploading the video stream to the server, sending, by the monitoring peripheral unit, a session update notification to the other monitoring client units, so as to make the other monitoring client units update session parameters according to the session update notification, and sending, by the server, the video stream of the monitoring peripheral unit to the other monitoring client units according to the updated session parameters; or
if the monitoring peripheral unit does not reserve a media session connection which is dedicated to uploading the video stream to the server, breaking, by the monitoring peripheral unit, a media session connection with one of the other monitoring client units and switching to use the forwarding by the server, uploading the video stream to the server, and sending a session update notification to the monitoring client unit to which the broken media session connection corresponds, so as to make the corresponding monitoring client unit update the session parameters according to the session update notification, and sending, by the server, the video stream of the monitoring peripheral unit to the monitoring client unit according to the updated session parameters.

3. The method according to claim 1 or 2, further comprising: after the process of converting media session connections which have already been established between the monitoring peripheral unit and other monitoring client units such that the other monitoring client units browse the videos of the monitoring peripheral unit via the forwarding by the server, after all the monitoring client units having media session connection with the server stop obtaining the video stream of the monitoring peripheral unit from the server, initiatively breaking, by the server, the media session connection with the monitoring peripheral unit.

4. A monitoring peripheral unit, applied to an IMS video monitoring system which comprises an IMS core network and a server, the monitoring peripheral unit comprising:
a receiving module, configured to receive a first call request for browsing videos of the monitoring peripheral unit from a monitoring client unit, wherein the first call request is a call request directly routed to the monitoring peripheral unit by the IMS core network when no media session connection exists between the server and the monitoring peripheral unit; and
a processing module, configured, when the number of the media session connections directly established between the monitoring peripheral unit and other monitoring client units reaches the maximal connection number supported by the monitoring peripheral unit, to enable the monitoring client unit to browse the videos of the monitoring peripheral unit via a forwarding by the server according to the first call request, otherwise, to establish a direct media session connection between the monitoring peripheral unit and the monitoring client unit so as to enable the monitoring client unit to browse the videos of the monitoring peripheral unit,
wherein the monitoring peripheral unit comprises: a control module, configured, after the monitoring peripheral unit enables the monitoring client unit to browse the videos of the monitoring peripheral unit via the forwarding by the server according to the first call request, to convert media session connections which have already been directly established between the monitoring peripheral unit and other monitoring client units such that the other monitoring client units browse the videos of the monitoring peripheral unit via the forwarding by the server;
wherein the processing module comprises:
a determining module, configured to determine that the number of the media session connections directly established between the monitoring peripheral unit and other monitoring client units reaches the maximal connection number supported by the monitoring peripheral unit, and then trigger a forwarding-via-server module; and
the forwarding-via-server module, configured to interact with the server, and guide the monitoring client unit to initiate a second call request for browsing the videos of the monitoring peripheral unit, so as to make the server send a video stream of the monitoring peripheral unit to the monitoring client unit according to the second call request;
wherein the forwarding-via-server module comprises:
an uploading module, configured to upload the video stream of the monitoring peripheral unit to the server; and
a responding module, configured to send a redirection response to the monitoring client unit according to the first call request, so as to make the monitoring client unit initiate the second call request for browsing the videos of the monitoring peripheral unit according to the redirection response, and make the server send the video stream of the monitoring peripheral unit to the monitoring client unit according to the second call request.

5. The monitoring peripheral unit according to claim 4, wherein the determining module is configured to determine that if the number of the media session connections directly established between the monitoring peripheral unit and other monitoring client units does not reach the maximal connection number supported by the monitoring peripheral unit, to then trigger a direct session module; and wherein the direct session module is configured to establish the direct media session connection with the monitoring client unit, so as to enable the monitoring client unit to browse the videos of the monitoring peripheral unit.

6. An IMS video monitoring system, comprising an IMS core network, the monitoring peripheral unit of any of claims 4 or 5, and a server connected with the IMS core network, wherein the IMS core network is configured to receive a first call request for browsing videos of the monitoring peripheral unit from a monitoring client unit, and to request to trigger the server according to the first call request; and wherein the server is configured, when no media session connection is established between itself and the monitoring peripheral unit, to notify the IMS core network to directly route the first call request to the monitoring peripheral unit.

## Patentansprüche

1. Ein Verfahren zur Durchführung von Videosuchen, angewandt auf ein IP-Multimedia-Subsystem-(IMS-)Videoüberwachungssystem, das eine periphere Überwachungseinheit, ein IMS-Kernnetzwerk und einen Server einschließt, wobei das Verfahren Folgendes umfasst:
das Empfangen (21), durch die periphere Überwachungseinheit, einer ersten Verbindungsanforderung zum Durchsuchen von Videos der peripheren Überwachungseinheit von einer Client-Überwachungseinheit, wobei die erste Verbindungsanforderung eine Verbindungsanforderung ist, die von dem IMS-Kernnetzwerk direkt an die periphere Überwachungseinheit geleitet wird, wenn keine Mediensitzungsverbindung zwischen dem Server und der peripheren Überwachungseinheit vorhanden ist;
Befähigen (22, 23), durch die periphere Überwachungseinheit entsprechend der ersten Verbindungsanforderung, der Client-Überwachungseinheit, die Videos der peripheren Überwachungseinheit zu durchsuchen, durch eine Weiterleitung durch den Server, wenn die Anzahl an Direktmediensitzungsverbindungen zwischen der peripheren Überwachungseinheit und anderen Client-Überwachungseinheiten eine maximale Verbindungsanzahl erreicht, die von der peripheren Überwachungseinheit unterstützt wird; ansonsten Herstellen (24) einer Direktmediensitzungsverbindung zwischen der peripheren Überwachungseinheit und der Client-Überwachungseinheit, um es der Client-Überwachungseinheit zu ermöglichen, die Videos der peripheren Überwachungseinheit zu durchsuchen, wobei das Verfahren weiter Folgendes umfasst: nach dem Prozess, den die periphere Überwachungseinheit ermöglicht, entsprechend der ersten Verbindungsanforderung, der Client-Überwachungseinheit, die Videos der peripheren Überwachungseinheit zu durchsuchen, durch das Weiterleiten durch den Server, wobei Mediensitzungsverbindungen umgewandelt werden, die bereits zwischen der peripheren Überwachungseinheit und anderen Client-Überwachungseinheiten hergestellt wurden, so dass die anderen Client-Überwachungseinheiten die Videos der peripheren Überwachungseinheit durchsuchen, durch die Weiterleitung durch den Server;
wobei der Prozess, den die periphere Überwachungseinheit ermöglicht, entsprechend der ersten Verbindungsanforderung, der Client-Überwachungseinheit, die Videos der peripheren Überwachungseinheit zu durchsuchen, durch das Weiterleiten durch den Server, Folgendes umfasst:
Interagieren, durch die periphere Überwachungseinheit, mit dem Server entsprechend der ersten Verbindungsanforderung, Führen der Client-Überwachungseinheit, um eine zweite Verbindungsanforderung zum Durchsuchen der Videos der peripheren Überwachungseinheit zu starten, um den Server zu veranlassen, einen Videostream der peripheren Überwachungseinheit an die Client-Überwachungseinheit entsprechend der zweiten Verbindungsanforderung zu senden;
wobei der Prozess, dass die periphere Überwachungseinheit mit dem Server entsprechend der ersten Verbindungsanforderung interagiert und die Client-Überwachungseinheit führt, um eine zweite Verbindungsanforderung zum Durchsuchen der Videos der peripheren Überwachungseinheit zu starten, Folgendes umfasst:
Heraufladen des Videostreams der peripheren Überwachungseinheit auf den Server durch die periphere Überwachungseinheit;
Zurückliefern einer Umleitungsantwort an die Client-Überwachungseinheit durch die periphere Überwachungseinheit entsprechend der ersten Verbindungsanforderung, um die Client-Überwachungseinheit zu veranlassen, die zweite Verbindungsanforderung zum Durchsuchen der Videos der peripheren Überwachungseinheit entsprechend der Umleitungsantwort zu starten.

2. Das Verfahren gemäß Anspruch 1, wobei der Prozess der Umwandlung der Mediensitzungsverbindungen, die bereits zwischen der peripheren Überwachungseinheit und anderen Client-Überwachungseinheiten hergestellt wurden, so dass die anderen Client-Überwachungseinheiten die Videos der peripheren Überwachungseinheit durchsuchen, durch das Weiterleiten durch den Server, Folgendes umfasst:
wenn die periphere Überwachungseinheit eine Mediensitzungsverbindung freihält, die dafür reserviert ist, den Videostream auf den Server hochzuladen, das Senden einer Sitzungsaktualisierungsmeldung an die anderen Client-Überwachungseinheiten durch die periphere Überwachungseinheit, um die anderen Client-Überwachungseinheiten zu veranlassen, Sitzungsparameter entsprechend der Sitzungsaktualisierungsmeldung zu aktualisieren, und das Senden des Videostreams der peripheren Überwachungseinheit an die anderen Client-Überwachungseinheiten entsprechend den aktualisierten Sitzungsparametern durch den Server; oder,
wenn die periphere Überwachungseinheit keine Mediensitzungsverbindung freihält, die dafür reserviert ist, den Videostream auf den Server hochzuladen, Unterbrechen, durch die periphere Überwachungseinheit, einer Mediensitzungsverbindung mit einer der anderen Client-Überwachungseinheiten und Wechseln, um die Weiterleitung durch den Server zu nutzen, Heraufladen des Videostreams auf den Server und Senden einer Sitzungsaktualisierungsmeldung an die Client-Überwachungseinheit, der die unterbrochene Mediensitzungsverbindung entspricht, um die entsprechende Client-Überwachungseinheit zu veranlassen, die Sitzungsparameter entsprechend der Sitzungsaktualisierungsmeldung zu aktualisieren, und Senden des Videostreams der peripheren Überwachungseinheit an die Client-Überwachungseinheit durch den Server entsprechend den aktualisierten Sitzungsparametern.

3. Das Verfahren gemäß Anspruch 1 oder 2, das weiter Folgendes umfasst: nach dem Verfahren der Umwandlung von Mediensitzungsverbindungen, die bereits zwischen der peripheren Überwachungseinheit und anderen Client-Überwachungseinheiten hergestellt wurden, so dass die anderen Client-Überwachungseinheiten die Videos der peripheren Überwachungseinheit durch das Weiterleiten durch den Server durchsuchen, nachdem alle Client-Überwachungseinheiten mit Mediensitzungsverbindung mit dem Server aufgehört haben, den Videostream der peripheren Überwachungseinheit vom Server zu erhalten, Unterbrechen der Mediensitzungsverbindung mit der peripheren Überwachungseinheit durch den Server aus eigener Initiative.

4. Eine periphere Überwachungseinheit, angewandt auf ein IMS-Videoüberwachungssystem, das ein IMS-Kernnetzwerk und einen Server umfasst, wobei die periphere Überwachungseinheit Folgendes umfasst:
ein Empfangsmodul, konfiguriert, um eine erste Verbindungsanforderung zum Durchsuchen von Videos der peripheren Überwachungseinheit von einer Client-Überwachungseinheit zu empfangen, wobei die erste Verbindungsanforderung eine Verbindungsanforderung ist, die vom IMS-Kernnetzwerk direkt an die periphere Überwachungseinheit geleitet wird, wenn keine Mediensitzungsverbindung zwischen dem Server und der peripheren Überwachungseinheit existiert; und
ein Verarbeitungsmodul, konfiguriert, um, wenn die Anzahl der Mediensitzungsverbindungen, die direkt zwischen der peripheren Überwachungseinheit und anderen Client-Überwachungseinheiten hergestellt werden, die maximale Verbindungsanzahl erreicht, die von der peripheren Überwachungseinheit unterstützt wird, die Client-Überwachungseinheit zu befähigen, die Videos der peripheren Überwachungseinheit zu durchsuchen, durch eine Weiterleitung durch den Server entsprechend der ersten Verbindungsanforderung, ansonsten eine Direktmediensitzungsverbindung zwischen der peripheren Überwachungseinheit und der Client-Überwachungseinheit herzustellen, um es der Client-Überwachungseinheit zu ermöglichen, die Videos der peripheren Überwachungseinheit zu durchsuchen,
wobei die periphere Überwachungseinheit Folgendes umfasst:
ein Steuerungsmodul, konfiguriert, um, nachdem die periphere Überwachungseinheit es der Client-Überwachungseinheit ermöglicht hat, die Videos der peripheren Überwachungseinheit zu durchsuchen, durch die Weiterleitung durch den Server entsprechend der ersten Verbindungsanforderung, Mediensitzungsverbindungen, die direkt zwischen der peripheren Überwachungseinheit und anderen Client-Überwachungseinheiten erstellt wurden, umzuwandeln, so dass die anderen Client-Überwachungseinheiten die Videos der peripheren Überwachungseinheit durchsuchen, durch die Weiterleitung durch den Server;
wobei das Verarbeitungsmodul Folgendes umfasst:
ein Bestimmungsmodul, konfiguriert, um zu bestimmen, dass die Anzahl der Mediensitzungsverbindungen, die direkt zwischen der peripheren Überwachungseinheit und anderen Client-Überwachungseinheiten hergestellt werden, die maximale Verbindungsanzahl erreicht, die von der peripheren Überwachungseinheit unterstützt wird, und dann ein Weiterleitungs-über-den-Server-Modul auszulösen; und
das Weiterleitungs-über-den-Server-Modul, konfiguriert, um mit dem Server zu interagieren und die Client-Überwachungseinheit zu führen, um eine zweite Verbindungsanforderung zur Durchsuchung der Videos der peripheren Überwachungseinheit zu starten, um den Server zu veranlassen, einen Videostream der peripheren Überwachungseinheit an die Client-Überwachungseinheit entsprechend der zweiten Verbindungsanforderung zu senden;
wobei das Weiterleitungs-über-den-Server-Modul Folgendes umfasst:
ein Hochlademodul, konfiguriert, um den Videostream der peripheren Überwachungseinheit auf den Server heraufzuladen; und
ein Antwortmodul, konfiguriert, um eine Umleitungsantwort an die Client-Überwachungseinheit entsprechend der ersten Verbindungsanforderung zu senden, um die Client-überwachungseinheit zu veranlassen, die zweite Verbindungsanforderung zur Durchsuchung der Videos der peripheren Überwachungseinheit entsprechend der Umleitungsantwort zu starten und den Server zu veranlassen, den Videostream der peripheren Überwachungseinheit an die Client-Überwachungseinheit entsprechend der zweiten Verbindungsanforderung zu senden.

5. Die periphere Überwachungseinheit gemäß Anspruch 4, wobei das Bestimmungsmodul konfiguriert ist, um zu bestimmen, wenn die Anzahl der Mediensitzungsverbindungen, die direkt zwischen der peripheren Überwachungseinheit und anderen Client-Überwachungseinheiten hergestellt werden, nicht die maximale Verbindungsanzahl erreicht, die von der peripheren Überwachungseinheit unterstützt wird, ein Direktsitzungsmodul auszulösen; und wobei das Direktsitzungsmodul konfiguriert ist, um die Direktmediensitzungsverbindung mit der Client-Überwachungseinheit herzustellen, um es so der Client-Überwachungseinheit zu ermöglichen, die Videos der peripheren Überwachungseinheit zu durchsuchen.

6. Ein IMS-Videoüberwachungssystem, das ein IMS-Kernnetzwerk, die periphere Überwachungseinheit gemäß einem beliebigen der Ansprüche 4 oder 5 und einen Server umfasst, der mit dem IMS-Kernnetzwerk verbunden ist, wobei das IMS-Kernnetzwerk konfiguriert ist, um eine erste Verbindungsanforderung zum Durchsuchen von Videos der peripheren Überwachungseinheit von einer Client-Überwachungseinheit zu empfangen und um das Auslösen des Servers entsprechend der ersten Verbindungsanforderung anzufordern; und wobei der Server konfiguriert ist, um, wenn keine Mediensitzungsverbindung zwischen ihm und der peripheren Überwachungseinheit hergestellt ist, das IMS-Kernnetzwerk zu benachrichtigen, die erste Verbindungsanforderung direkt an die periphere Überwachungseinheit zu leiten.

## Revendications

1. Procédé pour réaliser une consultation vidéo, appliqué à un système de surveillance vidéo utilisant le sous-système multimédia IP (IMS) qui inclut une unité périphérique de surveillance, un réseau central IMS et un serveur, le procédé comprenant :
de recevoir (21), par l'unité périphérique de surveillance, une première requête d'appel pour consulter des vidéos de l'unité périphérique de surveillance depuis une unité client de surveillance, dans lequel la première requête d'appel est une requête d'appel routée directement vers l'unité périphérique de surveillance par le réseau central IMS quand aucune connexion de session multimédia n'existe entre le serveur et l'unité périphérique de surveillance ;
de permettre (22, 23), par l'unité périphérique de surveillance selon la première requête d'appel, à l'unité client de surveillance de consulter les vidéos de l'unité périphérique de surveillance via un acheminement par le serveur, si le nombre de connexions de session multimédia directes entre l'unité périphérique de surveillance et d'autres unités client de surveillance atteint un nombre de connexions maximal supporté par l'unité périphérique de surveillance ; sinon, d'établir (24) une connexion de session multimédia directe entre l'unité périphérique de surveillance et l'unité client de surveillance, de façon à permettre à l'unité client de surveillance de consulter les vidéos de l'unité périphérique de surveillance, dans lequel le procédé comprend en outre : après le processus où l'unité périphérique de surveillance permet, selon la première requête d'appel, à l'unité client de surveillance de consulter les vidéos de l'unité périphérique de surveillance via l'acheminement par le serveur, de convertir des connexions de session multimédia qui ont déjà été établies entre l'unité périphérique de surveillance et d'autres unités client de surveillance de telle manière que les autres unités client de surveillance consultent les vidéos de l'unité périphérique de surveillance via l'acheminement par le serveur ;
dans lequel le processus où l'unité périphérique de surveillance permet, selon la première requête d'appel, à l'unité client de surveillance de consulter les vidéos de l'unité périphérique de surveillance via l'acheminement par le serveur comprend :
d'interagir, par l'unité périphérique de surveillance, avec le serveur selon la première requête d'appel, de guider l'unité client de surveillance pour initier une seconde requête d'appel pour consulter les vidéos de l'unité périphérique de surveillance, de façon à faire que le serveur envoie un flux vidéo de l'unité périphérique de surveillance à l'unité client de surveillance selon la seconde requête d'appel ;
dans lequel le processus où l'unité périphérique de surveillance interagit avec le serveur selon la première requête d'appel et guide l'unité client de surveillance pour initier une seconde requête d'appel pour consulter les vidéos de l'unité périphérique de surveillance comprend :
de téléverser, par l'unité périphérique de surveillance, le flux vidéo de l'unité périphérique de surveillance vers le serveur ;
de retourner, par l'unité périphérique de surveillance, une réponse de redirection à l'unité client de surveillance selon la première requête d'appel, de façon à faire que l'unité client de surveillance initie la seconde requête d'appel pour consulter les vidéos de l'unité périphérique de surveillance selon la réponse de redirection.

2. Procédé selon la revendication 1, dans lequel le processus de conversion des connexions de session multimédia qui ont déjà été établies entre l'unité périphérique de surveillance et d'autres unités client de surveillance de telle manière que les autres unités client de surveillance consultent les vidéos de l'unité périphérique de surveillance via l'acheminement par le serveur, comprend :
si l'unité périphérique de surveillance réserve une connexion de session multimédia qui est dédiée au téléversement du flux vidéo vers le serveur, d'envoyer, par l'unité périphérique de surveillance, une notification de mise à jour de session aux autres unités client de surveillance, de façon à faire que les autres unités client de surveillance mettent à jour des paramètres de session selon la notification de mise à jour de session, et d'envoyer, par le serveur, le flux vidéo de l'unité périphérique de surveillance aux autres unités client de surveillance selon les paramètres de session mis à jour ; ou
si l'unité périphérique de surveillance ne réserve pas une connexion de session multimédia qui est dédiée au téléversement du flux vidéo vers le serveur, de rompre, par l'unité périphérique de surveillance, une connexion de session multimédia avec l'une des autres unités client de surveillance et de commuter à l'utilisation de l'acheminement par le serveur, de téléverser le flux vidéo vers le serveur, et d'envoyer une notification de mise à jour de session à l'unité client de surveillance à laquelle la connexion de session multimédia rompue correspond, de façon à faire que l'unité client de surveillance correspondante mette à jour les paramètres de session selon la notification de mise à jour de session, et d'envoyer, par le serveur, le flux vidéo de l'unité périphérique de surveillance à l'unité client de surveillance selon les paramètres de session mis à jour,

3. Procédé selon la revendication 1 ou 2, comprenant en outre :
après que le processus de conversion de connexions de session multimédia qui ont déjà été établies entre l'unité périphérique de surveillance et d'autres unités client de surveillance de telle manière que les autres unités client de surveillance consultent les vidéos de l'unité périphérique de surveillance via l'acheminement par le serveur, après que toutes les unités client de surveillance ayant une connexion de session multimédia avec serveur ont cessé d'obtenir le flux vidéo de l'unité périphérique de surveillance depuis le serveur, de rompre de soi-même, par le serveur, la connexion de session multimédia avec l'unité périphérique de surveillance,

4. Unité périphérique de surveillance, appliquée à un système de surveillance vidéo utilisant le sous-système multimédia IP qui comprend un réseau central IMS et un serveur, l'unité périphérique de surveillance comprenant :
un module de réception, configuré pour recevoir une première requête d'appel pour consulter des vidéos de l'unité périphérique de surveillance depuis une unité client de surveillance, dans laquelle la première requête d'appel est une requête d'appel routée directement vers l'unité périphérique de surveillance par le réseau central IMS quand aucune connexion de session multimédia n'existe entre le serveur et l'unité périphérique de surveillance ; et
un module de traitement, configuré, quand le nombre de connexions de session multimédia établies directement entre l'unité périphérique de surveillance et d'autres unités client de surveillance atteint le nombre de connexions maximal supporté par l'unité périphérique de surveillance, de permettre à l'unité client de surveillance de consulter les vidéos de l'unité périphérique de surveillance via un acheminement par le serveur selon la première requête d'appel, sinon, d'établir une connexion de session multimédia directe entre l'unité périphérique de surveillance et l'unité client de surveillance de façon à permettre à l'unité client de surveillance de consulter les vidéos de l'unité périphérique de surveillance,
dans laquelle l'unité périphérique de surveillance comprend : un module de commande, configuré, après que l'unité périphérique de surveillance a permis à l'unité client de surveillance de consulter les vidéos de l'unité périphérique de surveillance via l'acheminement par le serveur selon la première requête d'appel, de convertir des connexions de session multimédia qui ont déjà été établies directement entre l'unité périphérique de surveillance et d'autres unités client de surveillance de telle manière que les autres unités client de surveillance consultent les vidéos de l'unité périphérique de surveillance via l'acheminement par le serveur ;
dans laquelle le module de traitement comprend :
un module de détermination, configuré pour déterminer que le nombre de connexions de session multimédia directement établies entre l'unité périphérique de surveillance et d'autres unités client de surveillance atteint le nombre de connexions maximal supporté par l'unité périphérique de surveillance, et déclencher ensuite un module d'acheminement par serveur ; et
le module d'acheminement par serveur, configuré pour interagir avec le serveur, et guider l'unité client pour initier une seconde requête d'appel pour consulter les vidéos de l'unité périphérique de surveillance, de façon à faire que le serveur envoie un flux vidéo de l'unité périphérique de surveillance à l'unité client de surveillance selon la seconde requête d'appel ;
dans laquelle le module d'acheminement par serveur comprend :
un module de téléversement, configuré pour téléverser le flux vidéo de l'unité périphérique de surveillance vers le serveur ; et
un module de réponse, configuré pour envoyer une réponse de redirection à l'unité client de surveillance selon la première requête d'appel, de façon à faire que l'unité client de surveillance initie la seconde requête d'appel pour consulter les vidéos de l'unité périphérique de surveillance selon la réponse de redirection, et faire que le serveur envoie le flux vidéo de l'unité périphérique de surveillance à l'unité client de surveillance selon la seconde requête d'appel.

5. Unité périphérique de surveillance selon la revendication 4, dans laquelle le module de détermination est configuré pour déterminer que si le nombre des connexions de session multimédia établies directement entre l'unité périphérique de surveillance et d'autres unités client de surveillance n'atteint pas le nombre de connexions maximal supporté par l'unité périphérique de surveillance, déclencher alors un module de session directe ; et
dans laquelle le module de session directe est configuré pour établir la connexion de session multimédia directe avec l'unité client de surveillance, de façon à permettre à l'unité client de surveillance de consulter les vidéos de l'unité périphérique de surveillance.

6. Système de surveillance vidéo utilisant l'IMS, comprenant un réseau central IMS, l'unité périphérique de surveillance selon l'une quelconque des revendications 4 ou 5, et un serveur connecté au réseau central IMS, dans lequel le réseau central IMS est configuré pour recevoir une première requête d'appel pour consulter des vidéos de l'unité périphérique de surveillance depuis une unité client de surveillance, et pour requérir de déclencher le serveur selon la première requête d'appel ; et dans lequel le serveur est configuré, quand aucune connexion de session multimédia n'est établie entre lui-même et l'unité périphérique de surveillance, pour notifier au réseau central IMS de router directement la première requête d'appel vers l'unité périphérique de surveillance.
